Europäisches Patentamt

European Patent Office

Office européen des brevets

(11) Veröffentlichungsnummer : **0 037 025**
**B1**

(12) # EUROPÄISCHE PATENTSCHRIFT

(45) Veröffentlichungstag der Patentschrift :
13.06.84

(51) Int. Cl.³ : **B 05 D 1/18**, B 05 C 7/00,
A 22 C 13/00

(21) Anmeldenummer : 81102081.7

(22) Anmeldetag : 20.03.81

(54) Verfahren zur Herstellung eines Schlauchs mit Filmüberzug aus Kunststoff auf der Aussenseite.

(30) Priorität : 28.03.80 DE 3012064

(43) Veröffentlichungstag der Anmeldung :
07.10.81 Patentblatt 81/40

(45) Bekanntmachung des Hinweises auf die Patenterteilung : 13.06.84 Patentblatt 84/24

(84) Benannte Vertragsstaaten :
AT BE CH DE FR GB IT LI LU NL SE

(56) Entgegenhaltungen :
EP-A- 0 008 646
DE-A- 1 900 324
DE-A- 1 938 748
DE-A- 2 540 996
DE-B- 1 142 297
DE-C- 1 504 690
US-A- 2 961 323

(73) Patentinhaber : HOECHST AKTIENGESELLSCHAFT
Postfach 80 03 20
D-6230 Frankfurt am Main 80 (DE)

(72) Erfinder : Heinrich, Wolfgang, Dr.
Friedrichstrasse 41
D-7335 Salach (DE)
Erfinder : Bytzek, Max
Pappelweg 13
D-6200 Wiesbaden (DE)
Erfinder : Hammer, Klaus-Dieter, Dr.
An der Hasenquelle 25
D 6500 Mainz-Mombach (DE)

**Beschreibung**

Die Erfindung betrifft ein Verfahren von der im Oberbegriff des Anspruchs 1 genannten Art, wie es aus der EP-A-0 008 646 bekannt geworden ist. Bei diesem bekannten Verfahren wird ein Schlauch aus Cellulosehydrat auf seiner Außenseite allerdings mit einer Lösung des Kunststoffs in organischen Lösungsmitteln versehen, so daß dort das Problem einer starken Wasseraufnahme und Quellung sowie einer Schrumpfung beim Trocknen, wie es bei der Beschichtung von Cellulosehydratschläuchen mit wäßrigen Flüssigkeiten der Fall ist, nicht vorhanden ist. Ferner wird der Schlauch nach dieser Druckschrift über Walzen geführt, die zwar die Schichtstärke des Auftrags annähernd einstellen, die aber eine Vergleichmäßigung der Beschichtung nicht gewährleisten können. Das Arbeiten mit organischen Lösungsmitteln ist jedoch technisch sehr aufwendig, da aus Gründen der Arbeitssicherheit und des Umweltschutzes ein abgeschlossenes System erforderlich ist und das verdampfte Lösungsmittel zurückgewonnen und gereinigt werden muß. Außerdem lassen sich Lösungsmittelreste nur schwer quantitativ aus dem Verfahrensprodukt entfernen.

Aus der DE-C-11 42 297 ist ein Verfahren zur Beschichtung der Außenseite eines Schlauchs aus Cellulosehydrat bekannt, bei dem man die Außenseite des Schlauchs mit wäßriger Kunststoff-Dispersion beaufschlagt, indem man den Schlauch durch die Dispersion hindurchführt. Der mit der wäßrigen Dispersion überzogene Schlauch wird dann mit Luft bis zum gewünschten Durchmesser aufgeblasen und in diesem Zustand getrocknet. Bei den bekannten Verfahren besteht die Gefahr, daß durch das Aufblasen des Schlauchs mit flüssiger Schicht aus wässriger Kunststoff-Dispersion auf seiner Außenseite der Ablauf der flüssigen Schicht ungleichmäßig ist und zu Fehlstellen in der Beschichtung führt. Die Ausbildung von Schichten aus flüssiger, wäßriger Kunststoff-Dispersion auf der Außenseite von Cellulosehydratschläuchen, bei denen die Schichten über die gesamte Umfangsfläche der Schlauchs gleichmäßig dick sind, ist bei Schläuchen, die durch Stützluft in ihrem Hohlraum aufgeblasen sind, häufig nicht oder nur schwer möglich, weil praktisch unvermeidliche Druckunterschiede im Schlauchlauchhohlraum zu ungleichmäßigem Ablauf der relativ niedrigviskosen Kunststoff-Dispersion an der Schlauchaußenseite und damit zu gleichmäßiger Schichtausbildung führt. Das Aufblasen des Schlauchs ist bei den bekannten Verfahren auch deshalb erforderlich, um der Kaliberabnahme des Schlauchs infolge seiner Quellung durch Abnahme von Dispersionsmittel aus der wäßrigen Kunststoff-Dispersion entgegenzuwirken.

Den bekannten Verfahren zur Außenbeschichtung von Schläuchen aus Cellulosehydrat mit wäßriger Kunststoff-Dispersion üblicher Konzentration ist der Nachteil gemeinsam, daß die wegen des relativ hohen Wassergehalts der verwendeten Kunststoff-Dispersion stark wasserdurchfeuchteten Cellulosehydratschläuche, insbesondere beim Trocknen die Neigung haben, in unerwünschter Weise ihre Dimension durch Schrumpfung zu verändern ; ferner ist bei den bekannten Verfahren nachteilig, daß infolge der Verwendung von wäßriger Kunststoff-Dispersion mit relativ niedrigem Anteil an dispergiertem Kunststoff, die zur Ausbildung eines Filmüberzugs auf der Schlauchaußenseite durch Wärmeeinwirkung auf den Schlauch zu vertreibende Wassermenge relativ groß im Verhältnis zur Menge des dispergierten Kunststoffanteils der Dispersion ist, so daß die bekannten Verfahren energetisch unvorteilhaft sind. Ferner führt bei den bekannten Verfahren die Notwendigkeit, die Schläuche insbesondere während des Trockenschritts — um dabei der Schrumpftendenz des Schlauchs entgegenzuwirken — in luftaufgeblasenem Zustand zu halten, bei der praktisch unvermeidlichen Schwankung des Innendrucks im Schlauch, infolge des freien Ablaufs der auf die Schlauchaußenseite aufgetragenen Schicht aus wäßriger Dispersion, zu ungleichmäßig ausgebildeten Filmüberzügen.

Der vorliegenden Erfindung liegt daher die Aufgabe zugrunde, ein Verfahren zur Ausbildung eines gleichmäßigen, unterbrechungsfreien, gleichmäßig dicken Filmüberzugs aus synthetischem Polymerisat auf der Außenseite eines Schlauchs aus Cellulosehydrat unter Verwendung wäßriger Kunststoff-Dispersion als Beschichtungsflüssigkeit vorzuschlagen, das durchführbar ist, ohne daß dabei Schrumpfung des Schlauchs in praktisch erheblichen Umfangs eintritt, so daß kein Aufblasen des Schlauchs nötig ist und bei dem trotz Verwendung von wäßriger Kunststoff-Dispersion mit relativ hohem Anteil an Dispergiertem die Beschichtung der Schlauchaußenseite mit flüssiger, wäßriger Kunststoff-Dispersion praktisch ablauffrei durchführbar ist und einwandfreie Filmbildung eintritt.

Die der Erfindung zugrunde liegende Aufgabe wird gelöst durch ein Verfahren mit den im Anspruch 1 genannten Merkmalen. Die Unteransprüche 2 bis 5 geben weitere Ausgestaltungen des Verfahrens an.

Bei der Durchführung des Verfahrens wird der Schlauch mit stetiger Geschwindigkeit längsaxial fortbewegt ; nachfolgend wird die genannte Bewegung des Schlauchs kurz mit dem Ausdruck « fortbewegt » beschrieben. Die Fortbewegung des Schlauchs kann beispielsweise dadurch erfolgen, daß man ihn — als letzten Schritt bei der Verfahrensdurchführung — fortlaufend auf eine rotierbar ausgebildete, antreibbare und angetriebene Vorratsrolle aufwickelt. Das Verfahren wird beispielsweise in der Weise durchgeführt, daß der Schlauch eine Fortbewegungsgeschwindigkeit vorteilhaft zwischen 30 und 60 m/min aufweist.

- Zur Durchführung des Verfahrens wird eine wäßrige Kunststoff-Dispersion verwendet, die einen, im Verhältnis zur Menge des Dispersionsmittels, hohen Anteil an dispergiertem Kunststoff besitzt. Als wäßrige Kunststoff-Dispersion mit hohem Anteil an Dispergiertem, bezogen auf das Gesamtgewicht der wässrigen Dispersion, gilt eine solche, die wenigstens 20 Gew.-% dispergierten Kunststoff enthält, besonders vorteilhaft sind wässrige Kunststoff-Dispersionen, die einen Anteil im Bereich von 20 bis 40, insbesondere 30 bis 40 Gew.-% dispergierten Kunststoff, bezogen auf das Gesamtgewicht der Dispersion, enthalten.

Zur Durchführung des Verfahrens geeignete wäßrige Kunststoff-Dispersionen sind insbesondere solche, deren dispergierter Kunststoff befähigt ist, nach Vertreiben des Dispersionsmittels aus der Disperison und nach Verschmelzung durch Einwirkung von Wärme hierfür hinreichender Temperatur, Kunststofffilme zu bilden, insbesondere solche, die praktisch undurchlässig für Wasser und Wasserdampf sind. Bevorzugt sind dabei solche wäßrigen Kunststoff-Dispersion, die als dispergierten Kunststoffanteil Copolymerisate mit überwiegendem Anteil an copolymerisiertem Vinylidenchlorid aufweisen, vorteilhaft solche, die wenigstens 75 Gew.-% copolymerisiertes Vinylidenchlorid umfassen. Ganz besonders geeignet sind solche wäßrigen Kunststoff-Dispersionen genannter Konzentration, die als dispergierten Kunststoffanteil Copolymerisate enthalten, die in der DE-B-25 12 995 sowie DE-C-25 12 994 beschrieben sind. Die genannten Kunststoffe bzw. Kunststoff-Dispersionen sind nicht Gegenstand der vorliegenden Erfindung.

Der zur Durchführung der Erfindung zur Verwendung gelangende Cellulosehydratschlauch hat vorteilhaft einen Quellwert (Wasseraufnahmevermögen) im Bereich von 120 bis 140 % (DIN 53 814) und ist bevorzugt faserverstärkt.

Unter einem faserverstärkten Cellulosehydratschlauch soll ein solcher verstanden werden, der eine in seine Wandung eingelagerte Faserbahn enthält. Die Fasereinlage in der Schlauchwand hindert die Diffusion von Wasser durch die Schlauchwand nicht. Der Cellulosehydratschlauch enthält in seiner Wandung vorteilhaft einen Wasseranteil im Bereich von 8 bis 12 Gew.-%, bezogen auf das Gesamtgewicht des Schlauchs sowie einen Anteil im Bereich von 18 bis 24 Gew.-%, vorteilhaft einen solchen von 22 Gew.-%, zur Weichmachung von Cellulosehydrat befähigtem, chemischem Mittel, beispielsweise Glycerin, Glykol oder Polyglykol.

Die gewichtsprozentualen Angaben beziehen sich dabei jeweils auf das Gesamtgewicht des faserverstärkten Cellulosehydratschlauchs. Vorstehend individualisierte, bevorzugt faserverstärkete sowie chemisches Weichmachungsmittel und Wasser enthaltende Cellulosehydratschläuche sind bekannt und nicht Gegenstand der vorliegenden Erfindung.

Der Schlauch besitzt wenigstens auf seiner Außenseite eine für Wasser sowie Wasserdampf durchlässige Schicht aus chemischem Mittel, beispielsweise aus einem wasserunlöslichen, durch Wärmehärtung gebildeten Reaktionsprodukt aus Epichlorhydrin mit einem Polyamin-Polyamid ; die genannte Schicht wirkt haftvermittelnd und führt beim Verfahrenserzeugnis zur festen Bindung des Kunststoffilmüberzugs am Substrat. Ein Schlauch mit haftvermittelnder Schicht auf der Außenseite wird nachfolgend Ausgangsschlauch (Verfahrensausgangsprodukt) bezeichnet.

Cellulosehydratschläuche mit haftvermittelnder Schicht aus chemischem Stoff auf der Oberfläche gehören zum Stande der Technik und sind per se nicht Gegenstand vorliegender Erfindung.

Das Verfahren wird in der Weise durchgeführt, daß der Kunststoffilmüberzug auf der Außenseite des Verfahrensendproduktes (Verfahrenserzeugnis) vorteilhaft eine Dicke entsprechend einem Flächengewicht im Bereich von vorteilhaft 6 bis 20 g Kunststoff pro m² Substratoberfläche, bevorzugt 8 bis 12 g Kunststoff pro m² Substratoberfläche, besitzt.

Der Filmüberzug ist unterbrechungsfrei ausgebildet sowie gleichmäßig dick.

Nachfolgend soll die Durchführung des erfindungsgemäßen Verfahrens beispielhaft beschrieben werden, wobei zu dessen Verwirklichung eine besonders geeignete Vorrichtung zur Verwendung gelangt und beschrieben wird. Als Ausgangsschlauch wird beispielsweise ein solcher verwendet, bei dem das ihn bildende Cellulosehydrat einen Quellwert von beispielsweise 130 % besitzt und der einen Wassergehalt von beispielsweise 10 Gew.-% und einen Anteil an Glycerin als Weichmacher von beispielsweise 22 Gew.-%, jeweils bezogen auf das Gesamtgewicht des Schlauchs, besitzt, der faserverstärkt ist und auf seiner Innen- und Außenseite eine wasser- und wasserdampfdurchlässige, dünne Schicht, beispielsweise eine solche entsprechend 30 bis 120 mg/m² einer haftvermittelnden chemischen Substanz, beispielsweise wasserunlösliches Reaktionsprodukt aus Epichlorhydrin und einem Polyamin-Polyamid, aufweist. Der Schlauch hat beispielsweise einen Durchmesser von 90 mm und eine flachgelegte Breite von 143 mm.

Auf einer drehbar ausgebildeten, ortsfest gelagerten Vorratsrolle ist ein langes Stück des genannten Schlauchs, beispielsweise ein solches einer Länge von 350 m, flachliegend aufgewickelt. Von der Vorratsrolle wird der Schlauch fortlaufend mit gleichbleibender Geschwindigkeit abgewickelt und in längsaxialer Richtung unter Bildung einer Schlauchschlaufe in flachliegendem Zustand zunächst in Richtung von oben nach unten verlaufend in eine mit wäßriger Kunststoff-Dispersion genannter Konzentration gefüllte Wanne ein und dann nach Umlenkung des flachliegenden Schlauchs unterhalb der Oberfläche der Beschichtungsflüssigkeit vertikal und in Richtung von unten nach oben verlaufend aus dieser heraus geführt. Die Umlenkung des Schlauchs in der Wanne erfolgt mit Hilfe einer Umlenkwalze, die am Wannenboden derart befestigt ist, daß die Walzenlängsachse horizontal verläuft, wobei sich zwischen Wannenboden und diesem unmittelbar benachbarten Teil der Umfangsfläche der Walze ein Abstand befindet, der größer ist als die doppelte Schlauchwanddicke.

Der Schlauch wird flachliegend um den Umfang der Umlenkwalze derart herumgeführt, daß er diesem teilweise anliegt.

Die als Beschichtungsflüssigkeit in der Warne befindliche wäßrige Kunststoff-Dispersion enthält beispielsweise 25 Gew.-% dispergierten Kunststoff, bestehend aus einem Copolymerisat aus 88 Gew.-% copolymerisiertem Vinylidenchlorid, 3 Gew.-% copolymerisierter Acrylsäure, 4 Gew.-% copolymerisiertem Acrylnitril und 5 Gew.-% copolymerisiertem Acrylsäuremethylester, wobei die gewichtsprozentualen Angaben sich jeweils auf das Gesamtgewicht des Copolymerisats beziehen. Eine Dispersion der genannten Konzentration ist herstellbar, indem man beispielsweise von einer solchen Dispersion ausgeht, die 55 Gew.-% des genannten Copolymerisats dispergiert enthält und diese Dispersion durch Verdünnen mit Wasser auf die für die Verfahrensdurchführung geeignete Konzentration bringt.

Der Schlauch wird beispielsweise mit einer Geschwindigkeit von 40 m/min längsaxial fortbewegt.

Die auf der Außenseite des vertikal in Richtung von unten nach oben aus der Beschichtungsflüssigkeit austretenden Schlauchs abgelagerte Schicht aus wäßriger Kunststoff-Dispersion wird als Ausgangsschicht bezeichnet, ihre Dicke als Ausgangsdicke. Oberhalb der Oberfläche der Beschichtungsflüssigkeit in der Wanne wird die Ausgangsdicke reduziert. Es ist vorteilhaft, den Schlauch mit Ausgangsschicht auf seiner Außenseite zunächst durch eine Luftstrecke zu führen und danach die Ausgangsdicke zu reduzieren.

Es soll unter Reduzierung der Ausgangsdicke verstanden werden, daß diese durch teilweises Zurückhalten wäßriger Kunststoff-Dispersion unter Ausbildung einer dünnen, flüssigen Schicht fortlaufend abgetragen wird.

Unter einer dünnen, flüssigen Schicht aus wäßriger Kunststoff-Dispersion ist eine solche zu verstehen, deren Dicke geringer ist, als die Ausgangsdicke auf der Schlauchaußenseite und aus der sich nach Egalisieren und anschließendem Vertreiben des wäßrigen Dispersionsmittels und Verschmelzen des Dispergierten durch Einwirkung von Wärme hinreichender Temperatur ein Filmüberzug aus Kunststoff auf der Schlauchaußenseite ausbildet, dessen Dicke einem Flächengewicht im Bereich von vorteilhaft 6 bis 20 g Kunststoff pro m² Substratoberfläche entspricht.

Das Reduzieren der Ausgangsdicke durch fortlaufendes teilweises Abtragen wäßriger Kunststoff-Dispersion und zugleichem Zurückhalten der jeweils abgetragenen Teilmenge derselben erfolgt dadurch, daß man den flachliegenden Schlauch mit Ausgangsschicht auf seiner Außenseite vertikal und in Richtung von unten nach oben fortlaufend durch den Dosierspalt eines horizontalen Walzenpaares führt, dessen Dosierspaltbreite der doppelten Dicke der Schlauchwand zuzüglich zweimal der Dicke einer flüssigen Schicht aus wäßriger Kunststoff-Dispersion der angegebenen Konzentration entspricht, die nach Egalisieren und nach Vertreiben des Dispersionsmittels aus ihr und durch Verschmelzen des Dispergierten durch Einwirkung von Wärme hierfür hinreichender Temperatur auf der Schlauchaußenseite zu einem Kunststofffilmüberzug einer gleichmäßigen Dicke, entsprechend einem Flächengewicht im Bereich von vorteilhaft 6 bis 20 g Copolymerisat pro m² Substratoberfläche führt.

Unter einem horizontalen Walzenpaar ist ein solches zu verstehen, bei dem durch die horizontal verlaufenden Achsen seiner parallelabständigen Walzen eine gemeinsame Ebene legbar ist. Die unmittelbar aufeinanderzuweisenden Teile der Umfangsflächen der Walzen begrenzen dabei den horizontalen Dosierspalt des Walzenpaares.

Der Schlauch hat vorteilhaft eine Wanddicke im Bereich von 80 bis 120 µm.

Der Dosierspalt des horizontalen Walzenpaares hat vorteilhaft eine Breite im Bereich von 200 bis 400 µm, bevorzugt eine Breite im Bereich von 200 bis 300 µm.

Das horizontale Dosierwalzenpaar ist als Einheit ortsfest gelagert, wobei sein horizontaler Walzenspalt sich derart oberhalb der mit Beschichtungsflüssigkeit gefüllten Wanne befindet, daß der flachliegende Schlauch im Bereich zwischen der Abheb-Linie des Schlauchs auf dem Umfang der Umlenkwalze und seinem Eintritt in den Spalt des Dosierwalzenpaares vertikal verläuft.

Es ist ein weiteres Kennzeichen der Erfindung, daß infolge des relativ geringen Wassergehalts der verwendeten wäßrigen Kunststoff-Dispersion ein freier Ablauf der exakt dosierten dünnen Schicht auf der Schlauchaußenseite nicht eintritt, so daß der Kunststofffilmüberzug auf der Außenseite des Schlauchs eine gleichmäßige Dicke besitzt.

Die ortsfeste Lagerung des Dosierwalzenpaares erfolgt beispielsweise durch ein Gestell, an dem die Walzen des Dosierwalzenpaares befestigt sind. Die Walzen des Dosierwalzenpaares sind jeweils drehbar sowie antreibbar ausgebildet, beispielsweise durch Motoren und werden bei der Verfahrensdurchführung angetrieben; ihre Umdrehungsrichtung entspricht jeweils der Schlauchfortbewegungsrichtung.

Die Fortbewegungsgeschwindigkeit des Schlauchs — beispeilsweise 40 m/min — die Konzentration der verwendeten wässrigen Kunststoff-Dispersion — beispielsweise eine solche von 25 Gew.-%, — die Schlauchwanddicke, beispielsweise eine solche von 100 µm, sowie die Breite des Dosierspalts, beispielsweise eine solche von 240 µm, des horizontalen Walzenpaares bestimmen in Zusammenwirkung die Dicke der flüssigen Schicht aus wäßriger Kunststoff- Dispersion auf der Schlauchaußenseite, die beispielsweise eine Dicke von 20 μm besitzt und die nach Vertreiben des Dispersionsmittels aus ihr, beispielsweise durch Wärmeeinwirkung, zu einem Kunststoffilmüberzug einer Dicke beispielsweise von 8 bis 10 μm führt.

Die Abstimmung der genannten Verfahrensparameter aufeinander kann für den jeweiligen Fall durch wenige und einfache Vorversuche in einfacher Weise ermittelt werden. Bei Bedarf kann die Breite des Dosierspalts und/oder die Schlauchfortbewegungsgeschwindigkeit ohne Unterbechung der Verfahrensdurchführung verändert werden.

Nach Austritt des flachliegenden Schlauchs aus dem Spalt des horizontalen Dosierwalzenpaares besitzt dieser auf seiner Außenoberfläche eine flüssige, dünne Schicht aus wäßriger Kunststoff-Dispersion ; die dünne Schicht wird dann fortlaufend egalisiert. Die Egalisierung der dünnen Schicht erfolgt, indem man die auf den Außenseiten der planen Wandflächen des flachliegenden, vertikal in Richtung von unten nach oben fortbewegten Schlauchs befindlichen Teile der Schicht jeweils fortlaufend eine Kraft einwirken läßt, welche die dünne Schicht vergleichmäßigt, ohne ihr Flächengewicht zu reduzieren. Nach Vertreiben des Dispersionsmittels aus der dünnen Schicht und Verschmelzen des Dispergierten durch Einwirkung von hinreichender Wärme erhält man einen gleichmäßig dicken Filmüberzug auf der Schlauchaußenseite.

Die bezeichnete Egalisierung der flüssigen Schicht kann beispielsweise dadurch erfolgen, daß man die nach außen weisenden Oberflächen der auf den planen Außenseiten des flachliegenden vertikal verlaufenden Schlauchs befindlichen Teile der flüssigen, dünnen Schicht fortlaufend jeweils mit der Kraft eines aus im geraden schmalen Schlitz eines Düsenelements austretenden Luftstroms mit einer Strömungsgeschwindigkeit derart beaufschlagt, daß diese die bezeichnete Egalisierung der flüssigen Schicht bewirkt. Die Längsachsen der geraden Schlitze der Düsenelemente des Luftrakels erstrecken sich dabei jeweils im rechten Winkel zur Schlauchlängsachse vorteilhaft in der Weise, daß durch die Längsachsen der Schlitze der Düsenelemente eine gemeinsame horizontale Ebene legbar ist.

Die das Luftrakel bildenden Düsenelemente sind jeweils ortsfest gelagert.

Eine andere Möglichkeit der bezeichneten Egalisierung der flüssigen, dünnen Schicht ist in der die Erfindung beschreibenden Zeichnung dargestellt und besteht darin, daß man die nach außen weisenden Oberflächen derjenigen Teile der dünnen Schicht, die sich jeweils auf den planen Außenseiten des flachliegenden Schlauchs befinden jeweils entlang gerader schmaler Zonen jeweils fortlaufend in Kontakt mit einem Teil der Umfangsfläche jeweils einer Egalisierwalze eines Egalisierwalzenpaares bringt und durch diese Einwirkung die angestrebte Vergleichmäßigung der flüssigen, dünnen Schicht auf der Außenseite des flachliegenden Schlauchs unter Reduzierung des Flächengewichts derselben verhindernden Bedingungen bewirkt. Die Kontaktzonen zwischen den Teilen der Umfangsflächen der Egalisierwalzen und den nach außen weisenden Oberflächen der flüssigen Schicht sind dabei schmal in Bezug auf die Breite des flachliegenden Schlauchs. Die geraden Kontaktzonen erstrecken sich jeweils im rechten Winkel zur Schlauchlängsachse.

Das Egalisierwalzenpaar ist in Schlauchfortbewegungsrichtung betrachtet oberhalb des bzw. nach dem Dosierwalzenpaar angeordnet. Die Egalisierwalzen des Egalisierwalzenpaares sind parallelabständig zueinander angeordnet ; aufeinanderzuweisende Teile der Umfangsflächen der Walzen des Egalisierwalzenpaares begrenzen dabei einen Spaltraum, dessen Breite derart bemessen ist, daß die auf den Außenseiten der planen Ebene des flachliegenden Schlauchs befindlichen Teile der flüssigen Schicht jeweils in Kontakt mit einem Teil der Umfangsfläche jeweils einer Egalisierwalze des Egalisierwalzenpaares treten.

Die Walzen des Egalisierwalzenpaares haben bevorzugt gleichen Durchmesser und bestehen aus Werkstoff, der ihnen Formstabilität verleiht, bevorzugt bestehen die oberflächenglatten Egalisierwalzen aus Stahl.

Die Walzen des Egalisierwalzenpaares sind jeweils ortsfest gelagert und jeweils um ihre Achsen rotierbar sowie antreibbar, beispielsweise mittels Motoren, ausgebildet.

Die Umdrehungsrichtung der Egalisierwalzen ist vorteilhaft jeweils gegenläufig zur Fortbewegungsrichtung des Schlauchs.

Die Egalisierung der dünnen, flüssigen Schicht kann auch durch formfeste, plattenartige Rakelemente erfolgen.

Es sind jeweils Vorrichtungen zur ortsfesten Lagerung des Dosierwalzenpaares, des Egalisierwalzenpaares, der die Luftbürste bildenden Düsenelemente, der Kühlwalze sowie der Vorratsrollen vorgesehen.

Der Schlauch mit egalisierter, dünner Schicht aus wäßriger Kunststoff-Dispersion auf seiner Außenseite wird dann der Einwirkung von Wärme unterworfen, deren Temperatur hinreicht, das Dispersionsmittel aus der flüssigen Schicht zu vertreiben und das Dispergierte zu einem unterbrechungsfreien Kunststoffilm zu verschmelzen, indem man ihn beispielsweise fortlaufend durch einen Trockentunnel hindurchführt.

Der Trockentunnel wird beispielsweise mit wärmeemittierenden Infrarot-Heizelementen ausgestattet. Am Anfang des Trockentunnels wird der in diesen eintretende Schlauch beispielsweise auf eine Temperatur von ca. 80 °C und am Ende des Trockentunnel auf eine Temperatur von beispielsweise 140 °C erhitzt.

Der Trockner ist vorteilhaft in mehrere, getrennt voneinander regelbare Trockenzonen unterteilt ; nach dem Verlassen des Trockner wird der Schlauch vorteilhaft gekühlt, beispielsweise dadurch, daß man ihn in Kontakt mit der wassergekühlten Umfangsfläche einer drehbar ausgebildeten Walze bringt. Die Kühlung des Schlauchs erfolgt um zu verhindern, daß nach Aufrollung des Schlauchs die einzelnen Rollenlagen aneinander haften.

Vorteilhaft wird der Schlauch vor der Wärmebeaufschlagung durch eine Luftstrecke bestimmter Länge hindurchgeführt, die Länge dieser Strecke beträgt beispielsweise 40 bis 60 cm und die Umgebungsluft hat dabei Raumtemperatur.

Gegebenenfalls wird der Schlauch nach Trocknung und Abkühlung mit Wasser befeuchtet, beispielsweise derart, daß der aus Cellulosehydrat bestehende Trägerschlauch einen Wasseranteil im Bereich von 8 bis 12 Gew.-%, vorteilhaft einen Wasseranteil von 10 Gew.-%, bezogen auf das Gesamtgewicht besitzt.

Das Verfahrenserzeugnis wird dann auf eine rotierbar ausgebildete sowie antreibbar und angetriebene Vorratsrolle aufgewickelt. Die Umfangsgeschwindigkeit der angetriebenen Vorratsrolle und ihre Drehrichtung werden derart gewählt, daß der Schlauch beim Aufwickeln auf diese mit der angegebenen Geschwindigkeit wie bezeichnet fortbewegt wird.

Für die Erfindung ist es charakteristisch, daß der Cellulosehydratschlauch während der Verfahrensdurchführung infolge des relativ geringen Wasseranteils der wäßrigen Kunststoff-Dispersion, die mit seiner Außenseite in Berührung kommt, nur eine Wassermenge aufnimmt, die deutlich geringer ist als die, welche dem Quellwert (Wasserrückhaltevermögen) des Schlauchs entspricht, so daß praktisch keine Schrumpfung des Schlauchs bei der Verfahrensdurchführung eintritt. Die bei der Beschichtung aufgenomene Wassermenge gleich/kleiner als 30 %, insbesondere 20 bis 30 % des Wasserrückhaltevermögens des Schlauchs. Es ist dabei überraschend, daß trotz des relativ geringen Wasseranteils bzw. relativ hohen Kunststoffanteils der Dispersion während der Verfahrensdurchführung eine einwandfreie Filmbildung gewährleistet ist und daß es nicht zur Ausbildung eines bröckligen Überzugs aus dispergiertem Polymerisat auf der Schlauchaußenseite kommt.

Das erfindungsgemäße Verfahren ist wegen der geringen Menge des aus der flüssigen Schicht aus wäßriger Kunststoff-Dispersion zur Ausbildung eines Kunststofffilms auf der Schlauchaußenseite zu vertreibenden Wassers energetisch vorteilhaft und erlaubt aus gleichem Grunde eine erhebliche Steigerung der Beschichtungsgeschwindigkeit.

Da der Ausgangsschlauch bei der Durchführung des erfindungsgemäßen Verfahrens infolge des relativ geringen Wasseranteils in seiner Schlauchwand im Verlaufe seiner Herstellung in nur praktisch unerheblichem Ausmaß schrumpft, ist es im Gegensatz zu bekannten Verfahren nicht erforderlich, der Schrumpftendenz durch Aufblasen des Schlauchs entgegenzuwirken. Beschichtungsfehler, die sich bei radialer Dehnung des Schlauchs und freiem Ablauf bei entsprechend hohem Schlauchinnendruck zur Verhinderung des Schlauchschrumpfs ergeben und auf herstellungsbedingte Unterschiede der Schlauchwanddicke zurückzuführen sind, werden bei der Durchführung des erfindungsgemäßen Verfahrens vermieden.

Der Wasseranteil der dünnen Schicht aus wäßriger Kunststoff-Dispersion auf der Außenseite des aus dem Dosierspalt des Dosierwalzenpaares austretenden Schlauchs ist nur so groß daß diese nicht frei abläuft. Die Schlauchaußenbeschichtung erfolgt demnach in Bezug auf die dünne Schicht ablauffehlerfrei und in Bezug auf den Trägerschlauch praktisch schrumpfungsfrei.

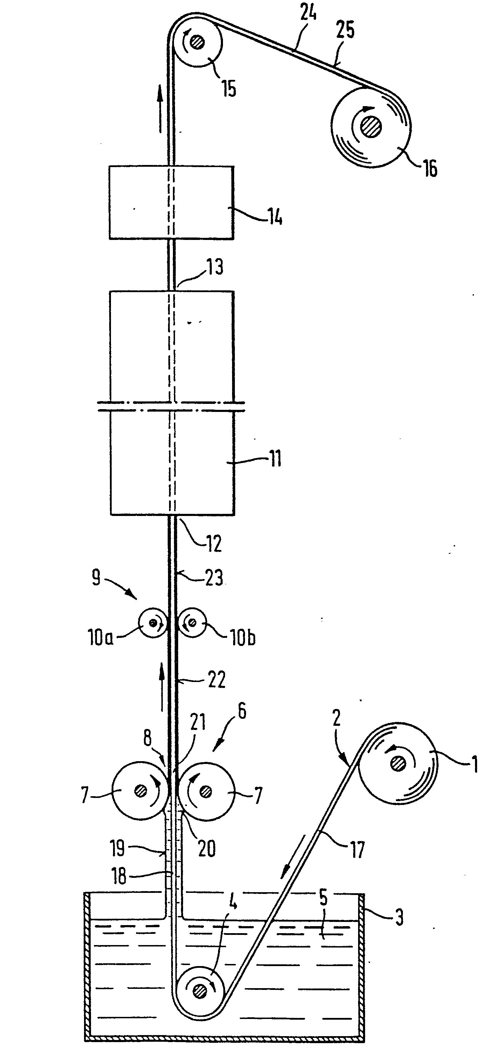

Die Zeichnung soll die Erfindung, insbesondere die Durchführung der Verfahrensweise beispielhaft erläutern. In der Zeichnung bedeutet 1 eine rotierbar ausgebildete Vorratsrolle mit darauf aufgewickeltem Verfahrensausgangsprodukt 2 in Gestalt eines in der Beschreibung bezeichneten Cellulosehydratschlauchs mit haftvermittelnder Schicht aus chemischem Stoff auf seiner Außenseite, 3 ist eine Wanne, in der in der Nähe ihres Bodens eine rotierbar ausgebildete Umlenkrolle 4 vorgesehen ist, 5 bedeutet wäßrige Kunststoff-Dispersion in der Wanne, 6 ist ein horizontales Dosierwalzenpaar, 7 die rotierbar sowie antreibbar ausgebildeten Walzen desselben, 8 ist der durch die Umfangsflächen der Walzen 7 begrenzte Dosierspalt des Walzenpaares, 9 ein Egalisierwalzenpaar mit den Walzen 10a und 10b, 11 ist ein Trockentunnel mit seinem Eingang 12 und seinem Ausgang 13, es ist 14 ein mit heißem Wasserdampf beaufschlagter Befeuchtungstunnel. Es ist 15 eine rotierbar ausgebildete kühlbare und gekühlte Walze, 16 eine rotierbar ausgebildete und antreibbare Trommel zum Aufwickeln und zur Fortbewegung des Verfahrensproduktes. 17 ist das Schlauchstück vor Eintritt in die mit Beschichtungsflüssigkeit gefüllte Wanne, 18 der durch die Umlenkrolle vertikal umgelenkte in Richtung von unten nach oben verlaufende Schlauch, es ist 19 die sich durch Mitnahme von Beschichtungsflüssigkeit auf der Schlauchaußenseite gebildete Ausgangsschicht aus wäßriger Kunststoff-Dispersion, 20 ist die von den Walzen des Dosierwalzenpaares zurückgehaltene Kunststoff-Dispersion der Ausgangsschicht, 21 ist der aus dem Dosierspalt des Walzenpaares austretende flachliegende Schlauch mit dünner Schicht aus wäßriger Kunststoff-Dispersion 22, 23 ist die egalisierte, dünne Schicht und 24 der Schlauch nach Abkühlung wobei 25 der nicht mehr klebende Filmüberzug aus Kunststoff ist.

## Ansprüche

1. Verfahren zur Herstellung eines Schlauchs, insbesondere geeignet als Wursthülle, mit einem — gegebenenfalls für Wasserdampf im wesentlichen undurchlässigen — Filmüberzug aus Kunststoff auf seiner Außenseite, wobei man die Außenseite eines flachliegenden Schlauchs auf Basis von vorzugsweise faserverstärktem Cellulosehydrat, gegebenenfalls mit haftvermittelnder Schicht auf der Außenseite, mit einer Kunststoff enthaltenden Flüssigkeit mit einer Ausgangsdicke beschichtet, wobei der Anteil an Kunststoff wenigstens 20 Gew.-%, bezogen auf das Gesamtgewicht der Flüssigkeit beträgt, danach den weiterhin flachliegenden Schlauch im wesentlichen in vertikaler und längsaxialer Richtung nach oben und durch einen Dosierspalt mit definierter Spaltbreite führt, wodurch die Ausgangsdicke aus Kunststoff enthaltender Flüssigkeit auf der Schlauchaußenseite zu einer dünnen Schicht reduziert wird, und anschließend den Schlauch weiterhin im flachliegenden Zustand zum Vertreiben der flüchtigen Anteile der aufgetragenen Schicht und Ausbilden des Kunststofffilmüberzugs mit Wärme beaufschlagt, dadurch gekennzeichnet, daß man den Schlauch mit einer wäßrigen Kunststoffdispersion beschichtet, wobei die vom Schlauch aus der wäßrigen Kunststoffdispersion aufgenommene Wassermenge gleich/kleiner ist als 30 % des Wasserrückhaltevermögens des Schlauchs, und die nach der Reduzierung der Ausgangsdicke der wäßrigen Kunststoffdispersion erhaltene dünne Schicht ohne weitere Reduzierung ihrer Dicke egalisiert, wobei man nach der Beaufschlagung mit Wärme einen gleichmäßig dicken unterbrechungsfreien Filmüberzug aus Kunststoff auf der Schlauchaußenseite erhält.

2. Verfahren nach Anspruch 1, dadurch gekennzeichnet, daß man die dünne Schicht zur Egalisierung fortlaufend in Kontakt mit Teilen der Umfangsflächen von Egalisierwalzen bringt oder mit einem Luftstrom beaufschlagt.

3. Verfahren nach Anspruch 1 oder 2, dadurch gekennzeichnet, daß die wäßrige Kunststoff-Dispersion einen Anteil an dispergiertem Kunststoff im Bereich von 20 bis 40 Gew.-%, bezogen auf das Gesamtgezicht der Dispersion, besitzt.

4. Verfahren nach einem der Ansprüche 1 bis 3, dadurch gekennzeichnet, daß der Schlauch, nach Vertreiben des Dispersionsmittels aus der egalisierten Schicht und Verschmelzen des Dispergierten, auf der Schlauchaußenseite einen Filmüberzug einer gleichmäßigen Dicke, entsprechend einem Flächengewicht im Bereich von 6 bis 20, insbesondere 8 bis 12 g/m² Substratoberfläche besitzt.

5. Verfahren nach einem der Ansprüche 1 bis 4, dadurch gekennzeichnet, daß das Wasseraufnahmevermögen des Schlauchs, insbesondere des faserverstärkten Cellulosehydratschlauchs, 120 bis 140 % beträgt und die vom Schlauch während der Beschichtung aufgenommene Wassermenge vorzugsweise 20 bis 30 % seines Wasseraufnahmevermögens beträgt.

## Claims

1. A process for the manufacture of a tubing which is, in particular, suitable for use as a sausage casing and has a plastic film coating on its outside, which is optionally substantially impermeable to water vapour, the process comprising coating the outside of a layflat tubing based on a preferably fibre-reinforced cellulose hydrate, which optionally has an adhesive-promoting coating on its outside, with a plastic-containing liquid in a starting thickness, the content of plastic being at least 20 % by weight, relative to the total weight of the liquid, thereafter passing the still flattened tubing substantially vertically upwards in the direction of its longitudinal axis and through a metering nip having a defined width of nip, thereby reducing the initial thickness of plastic-containing liquid on the outside of the tubing to a thin layer and then exposing the tubing, which is invariably in the layflat condition, to heat to expel the volatile constituents of the applied layer and to form the plastic film coating, wherein the tubing is coated with an aqueous plastic dispersion, with the amount of water absorbed by the tubing from the aqueous plastic dispersion being equal to/less than 30 % of the water retention value of the tubing, and the thin layer obtained after reducing the initial thickness of the aqueous plastic dispersion is levelled without further reducing its thickness so that an uninterrupted plastic film coating of uniform thickness is produced on the outside of the tubing after exposure to heat.

2. A process as claimed in claim 1, wherein levelling of the thin layer is effected by bringing the layer continuously into contact with parts of the circumferential surface of levelling rolls or exposing the layer to a stream of air.

3. A process as claimed in claim 1 or claim 2, wherein the aqueous plastic dispersion used has a content of dispersed plastic in the range of 20 to 40 % by weight, relative to the total weight of the dispersion.

4. A process as claimed in any of claims 1 to 3, wherein the tubing, after expelling the dispersion medium from the levelled layer and fusing the dispersed component, has a film coating of uniform thickness corresponding to a weight per unit area in the range of 6 to 20 g/m², particularly of 8 to 12 g/m² of substrate surface, on the outside of the tubing.

5. A process as claimed in any of claims 1 to 4, wherein the water retention value of the tubing, particularly of the fibre-reinforced cellulose hydrate tubing, is from 120 to 140 % and the amount of water absorbed by the tubing in the coating procedure is preferably from 20 to 30 % of its water retention value.

## Revendications

1. Procédé pour la fabrication d'un boyau, en particulier approprié à l'utilisation comme peau pour saucisses, ayant sur sa face externe un revêtement de film de matière plastique — le cas échéant essentiellement imperméable à la vapeur d'eau — dans lequel la face externe d'un boyau à plat, à base d'hydrate de cellulose, de préférence renforcé par des fibres et ayant, le cas échéant, une couche adhésive sur sa face externe, est recouverte d'un liquide contenant de la matière plastique d'une épaisseur initiale, la proportion de matière plastique étant d'au moins 20 % en poids par rapport au poids total du liquide, le boyau se trouvant encore à plat est ensuite entraîné, essentiellement verticalement de bas en haut dans la direction de son axe longitudinal, par une fente de dosage de largeur de fente définie, de sorte que l'épaisseur initiale de liquide contenant de la matière plastique sur la face externe du boyau soit réduite à une couche mince et ensuite le boyau se trouvant encore sous une forme plate est exposé à la chaleur pour chasser les constituants volatils de la couche appliquée et former le revêtement de film de matière plastique, caractérisé en ce que le boyau est recouvert d'une dispersion aqueuse de matière plastique, la quantité d'eau de la dispersion aqueuse de matière plastique absorbée par le boyau étant égale/inférieure à 30 % de la capacité d'absorption d'eau du boyau, et la couche mince obtenue après la réduction de l'épaisseur initiale de la dispersion aqueuse de matière plastique est égalisée sans autre réduction de son épaisseur et on obtient, après l'action de la chaleur, un revêtement de film de matière plastique d'épaisseur uniforme et sans discontinuité sur la face externe du boyau.

2. Procédé selon la revendication 1, caractérisé en ce qu'on égalise la couche mince en la mettant en contact en continu avec des parties des surfaces périphériques de cylindres d'égalisation ou en l'exposant à un courant d'air.

3. Procédé selon la revendication 1 ou 2, caractérisé en ce que la dispersion aqueuse de matière plastique a une proportion de matière plastique dispersée comprise entre 20 et 40 % en poids, par rapport au poids total de la dispersion.

4. Procédé selon l'une quelconque des revendications 1 à 3, caractérisé en ce qu'après élimination de l'agent de dispersion de la couche égalisée et fusion du constituant dispersé, on obtient sur la face externe du boyau un revêtement de film d'épaisseur uniforme, correspondant à un poids par unité de surface de 6 à 20, en particulier de 8 à 12 g/m$^2$ de surface de support.

5. Procédé selon l'une quelconque des revendications 1 à 4, caractérisé en ce que la capacité d'absorption d'eau du boyau en particulier du boyau en hydrate de cellulose renforcé par des fibres atteint de 120 à 140 % et la quantité d'eau absorbée par le boyau pendant le revêtement atteint de préférence de 20 à 30 % de la capacité d'absorption d'eau du boyau.

**0 037 025**